## Europäisches Patentamt
## European Patent Office
## Office européen des brevets

(19)

(11) Numéro de publication: **0 124 385**
**B1**

(12) # FASCICULE DE BREVET EUROPÉEN

(45) Date de publication du fascicule du brevet:
**22.07.87**

(51) Int. Cl.⁴: **A 23 C 3/037,** A 23 L 2/20,
A 23 C 9/15

(21) Numéro de dépôt: **84400312.9**

(22) Date de dépôt: **15.02.84**

(54) **Procédé de préparation et de traitement thermique de produits alimentaires et appareillage pour sa mise en oeuvre.**

(30) Priorité: **29.03.83 FR 8305149**

(43) Date de publication de la demande:
**07.11.84 Bulletin 84/45**

(45) Mention de la délivrance du brevet:
**22.07.87 Bulletin 87/30**

(84) Etats contractants désignés:
**AT BE CH DE FR IT LI LU NL SE**

(56) Documents cité:
**DE-A-1 607 130**
**FR-A-2 008 187**
**US-A-2 712 504**

(73) Titulaire: **Torterotot, Roland, Le Plessis Mornay,
F-78730 Longvilliers (FR)**

(72) Inventeur: **Torterotot, Roland, Le Plessis Mornay,
F-78730 Longvilliers (FR)**

(74) Mandataire: **Ahner, Francis, CABINET REGIMBEAU
26, avenue Kléber, F-75116 Paris (FR)**

EP 0 124 385 B1

LIBER, STOCKHOLM 1987

## Description

La présente invention concerne un procédé de préparation et de traitement thermique de produits alimentaires renfermant une fraction prépondérante de liquide de constitution, du type général comportant une opération de mélange d'un volume approprié de liquide de constitution et d'un concentré renfermant les ingrédients de base du produit alimentaire, ainsi qu'une opération de traitement thermique destinée à assurer la conservation du produit. Cette dernière opération de traitement thermique peut consister indifféremment en une stérilisation ou une pasteurisation.

La présente invention concerne en particulier, mais non exclusivement, la reconstitution ou la fabrication de produits alimentaires liquides par dilution avec de l'eau d'un concentré renfermant les ingrédients de base du produit alimentaire. A titre d'exemples de ces produits alimentaires liquides, on mentionnera les jus de fruits et les laits naturels ou additionnés de divers agents aromatisants. Cependant, la présente invention s'étend également à des produits alimentaires se présentant sous une forme plus ou moins gélifiée et pouvant en outre contenir des morceaux solides, en particulier des matières pulpeuses telles que des morceaux de fruits.

De nombreux pays ou contrées du monde ne disposent pas de source locale de production de certains de ces produits alimentaires liquides, en particulier de laits ou de jus de fruits. Dès lors, l'existence de distances pénalisantes entre producteurs et consommateurs rend fort intéressante la fabrication sur place de tels produits à partir de leurs constituants, mis sous une forme de poudre ou de concentré, et d'eau. Une fois reconstitués, ces produits liquides doivent être soumis à un traitement de conservation (stérilisation, pasteurisation, chambrage, etc.), puis conditionnés de façon stérile.

Les procédés mis en oeuvre jusqu'ici consistent en une reconstitution préliminaire du produit alimentaire avec stockage intermédiaire dans un réservoir, puis traitement thermique de stérilisation ou de pasteurisation. Par ailleurs, le traitement thermique est habituellement effectué soit indirectement à travers des parois, soit directement en injectant de la vapeur d'eau à température élevée dans le produit reconstitué, soit en faisant tomber ce dernier sous forme de gouttelettes dans un jet de vapeur d'eau à température élevée. Ces modes opératoires présentent l'inconvénient, en chauffage indirect de créer des dépôts contre les parois ou un phénomène de caramélisation, et en chauffage direct l'inconvénient d'incorporer au produit traité une certaine quantité d'eau excédentaire qui doit être ultérieurement enlevée. Une telle stérilisation est par exemple illustrée par FR-A-2 008 187.

Il résulte de ce qui précède que les procédés connus sont complexes et dispendieux en investissements, en personnes et en énergie.

L'invention a précisément pour but de remédier à ces divers inconvénients, et permet en outre de supprimer la phase intermédiaire de stockage du produit reconstitué avant traitement thermique.

Ce but est atteint conformément à la présente invention grâce à un procédé qui consiste essentiellement à utiliser, pour la reconstitution du produit alimentaire, un liquide de constitution, par exemple de l'eau, porté à une température telle qu'il conduise à un mélange reconstitué dont la température est voisine de celle à laquelle doit être effectué le traitement thermique désiré. Ce procédé assure ainsi la préparation, en particulier la reconstitution de produits alimentaires liquides, et, simultanément leur traitement thermique de conservation. On obtient ainsi les produits alimentaires finis, non pas à partir de produits reconstitués en une étape intermédiaire, mais directement à partir de concentrés ou de poudres mises sous forme de concentrés par délayage avec une faible quantité de liquide de constitution. Or, le stockage des concentrés ou des poudres, qui peut s'effectuer sans précaution particulière, est plus facile et moins onéreux, du fait de leur moindre volume, que celui des produits liquides reconstitués, dont le composant principal est par exemple l'eau. D'autre part, le chauffage in situ en phase liquide des produits alimentaires par dilution avec de l'eau surchauffée assure une température uniforme de ceux-ci, atteinte instantanément, sans aucun risque de décomposition au contact des parois, qui apparait lorsque le chauffage est effectué de façon externe à travers les parois d'un récipient. De surcroît, une telle décomposition affecte les qualités organoleptiques du produit fini et engendre un encrassement du matériel. De plus, le mode de traitement thermique conforme à la présente invention évite ipso facto toute incorporation parasite d'eau excédentaire aux produits préparés, puisque l'addition de l'eau surchauffée s'effectue précisément en une quantité correspondant exactement au taux de dilution désiré.

Conformément à une autre caractéristique de la présente invention, après une durée de traitement thermique suffisante pour assurer la conservation du produit alimentaire, on effectue le cas échéant un refroidissement direct et instantané dudit produit par injection sous pression d'un volume additionnel de liquide de constitution stérile, dont la température est approximativement comprise entre 5 et 50°C, et qui peut éventuellement contenir des additifs thermosensibles.

En effet, dans le cas de reconstitution de certaines substances liquides telles que le lait, il peut être nécessaire de refroidir très rapidement le produit après une courte période de mélange et de chambrage. Dans pareil cas, le traitement thermique n'est effectué qu'avec une partie du liquide de constitution surchauffé, la partie restante étant injectée ultérieurement, à froid et sous forme stérile, en vue d'assurer un refroidissement brutal.

La température du liquide de refroidissement sera bien sûr fonction de la quantité additionnelle d'eau stérile injectée à froid.

Il est parfaitement clair que dans le cas des échangeurs de chaleur à plaques ou à tubes, un tel refroidissement brusque est rigoureusement impossible en raison de l'inertie thermique importante inhérent à un tel type de traitement indirect. En revanche, la présente invention permet de résoudre ce problème de façon tout à fait élégante et efficace.

Dans le cas particulier d'un produit alimentaire liquide qui devrait être reconstitué à partir de 75 parties de liquide de constitution et de 25 parties de concentré, il est possible par exemple de réaliser une reconstitution incomplète et un traitement thermique avec seulement par exemple 45 parties d'eau de constitution. On fait ainsi subir le traitement thermique à un liquide incomplètement reconstitué.

A la fin des opérations de mélange et de chambrage, par exemple au bout d'un temps d'environ 5 secondes, on injecte alors le reliquat du liquide de reconstitution, par exemple 30 parties, en particulier de l'eau stérile froide sous pression, ce qui permet de parachever la reconstitution du produit alimentaire et simultanément de refroidir instantanément ledit produit.

L'eau froide stérile est ainsi injectée par exemple à une pression de l'ordre d'environ $8.10^5$Pa et peut bien sûr contenir également des vitamines solubles ou encore d'autres additifs qui seraient détruits ou dénaturés lors de l'opération de traitement thermique initiale.

Afin d'éviter l'utilisation d'eau surchauffée à une température excessive pour porter le produit alimentaire à la température de traitement convenable, la fraction correspondant au concentré dans le produit reconstitué ne doit pas être trop élevée. Dans le cas de lait ou de jus de fruits obtenus à partir d'un mélange pulvérulent, la fraction de concentré représente environ 20 à 50 % en poids du produit reconstitué.

Selon d'autres caractéristiques additionnelles de la présente invention, la température du liquide de constitution surchauffé est par exemple comprise entre environ 105 et environ 200°C. Lorsque ce liquide de constitution est par exemple de l'eau surchauffée, cette dernière peut être injectée sous une pression de l'ordre de $18.10^5$Pa. Le concentré, est injecté sous une pression inférieure par exemple de l'ordre de $8.10^5$Pa.

De façon avantageuse, les injections du liquide de constitution et du concentré sont réalisées à contre-courant afin de favoriser la formation d'un mélange intime.

Il a en outre été constaté dans la pratique qu'il était préférable que le concentré soit injecté selon une direction ascensionnelle. Un tel agencement permet en effet au concentré, sous l'action de la gravité, de ne pas avoir tendance à migrer vers la zone de mélange proprement dite qui doit rester stérile même lors d'une interruption du procédé. Ce point sera développé plus en détail par la suite notamment en référence à la figure 2.

Le concentré est avantagensement un liquide pâteux obtenu par mélange d'une faible fraction du volume du liquide de constitution et des ingrédients de base pulvérulents du produit alimentaire. Le concentré peut contenir des fragments pulpeux, notamment des fragments de fruits.

Le procédé conforme à la présente invention s'avère particulierement avantageux lorsque le produit alimentaire ainsi préparé et thermiquement traité est, après refroidissement, directement soumis à un conditionnement stérile. On passe ainsi, sans aucune étape intermédiaire, du produit transporté et stocké sous forme de poudre ou de concentré au produit alimentaire final en emballage stérile, prêt pour la distribution.

La présente invention concerne également un appareillage destiné à permettre la mise en oeuvre du procédé défini ci-dessus. Cet appareillage comprend une enceinte tubulaire de mélange reliée d'une part à une pompe doseuse délivrant le concentré soutiré d'au moins un réservoir de stockage, et d'autre part un generateur de liquide de constitution surchauffé. Ce dernier comprend de préférence une pompe d'injection alimentant le dispositif mélangeur par exemple en eau surchauffée. Cette pompe et la pompe doseuse précitée sont contrôlées de manière que leurs débits choisis restent constamment proportionnels, le facteur de proportionnalité dépendant du taux de dilution nécessaire à la fabrication de chaque produit alimentaire.

L'enceinte tubulaire de mélange est avantageusement équipée d'une sonde thermostatique assurant le réglage, en fonction de la température dans cette zone, du module de chauffage qui comporte le générateur d'eau surchauffée, de manière que le traitement thermique s'effectue correctement.

Selon une autre caractéristique de l'appareillage de l'invention, celui-ci comporte en aval de l'enceinte tubulaire de mélange, un dispositif d'injection d'eau stérile froide sous pression et à température contrôlée.

A la place de ce dispositif d'injection d'eau stérile froide ou, conjointement, l'appareillage peut être également équipé en aval de l'enceinte tubulaire de mélange, d'un échangeur de chaleur dans lequel le produit alimentaire se trouve refroidi. Ainsi, dans le cas particulier d'une reconstitution d'un produit alimentaire par simple adjonction au concentré d'une quantité d'eau égale à celle qui fût prélevée lors de la concentration du produit, par exemple du jus de fruits ou du lait, il est avantageux de coupler le circuit de refroidissement de l'échangeur au circuit d'alimentation en eau du générateur d'eau surchauffée. Il devient ainsi possible de récupérer des calories extraites par l'échangeur lors du refroidissement du produit reconstitué, pour échauffer préalablement l'eau d'alimentation dudit générateur.

L'entrée et la sortie de l'enceinte tubulaire de l'appareillage sont équipées respectivement de moyens anti-retour et de moyens de contre-pression. Ces moyens sont essentiels puisque c'est eux qui assurent le maintien d'une pression suffisante à l'intérieur de l'enceinte tubulaire pour empêcher le liquide de constitution surchauffé de se vaporiser. En effet, on a vu précédemment que la présence de vapeur au sein du mélange conduisait à un certain nombre d'inconvénients, par exemple en donnant naissance à des condensats difficilement contrôlables.

A la sortie de l'appareillage, est de préférence prévu un réservoir tampon qui reçoit le produit alimentaire de préférence après refroidissement; ce réservoir étant doté d'une sonde de niveau agissant sur la pompe du générateur de liquide de constitution surchauffé. Une telle caractéristique permet de régler le régime de reconstitution du produit en fonction de la demande en aval, qui peut être en particulier celle d'un groupe de conditionnement stérile directement relié à la sortie de l'appareillage pour effectuer l'emballage du produit reconstitué et traité thermiquement.

Dans une forme d'exécution avantageuse de l'appareillage selon la présente invention, la commande et le réglage des différents éléments constitutifs sont assurés par un calculateur programmé dont le programme est déterminé en fonction de chaque produit alimentaire préparé. On peut obtenir ainsi un ensemble de préparation, de traitement thermique et de conditionnement stérile entièrement autonome, dont le fonctionnement se déroule automatiquement en toute sécurité et sans aucune intervention humaine en dehors éventuellement de l'approvisionnement en constituants de base. Un tel appareillage peut être réalisé sous une forme simple et compacte permettant son installation sur les lieux de consommation dans des locaux quelconque sommairement aménagés, d'ou il résultera bien sûr un abaissement des coûts de distribution du produit ainsi préparé et conditionné, avec adaptation immédiate au marché local.

D'autres caractéristiques et avantages de la présente invention ressortiront de la description détaillée faite ci-après notamment en regard des dessins annexés sur lesquels:
- La figure 1 représente un diagramme schématique d'un mode de réalisation particulier d'un appareillage selon l'invention,
- la figure 2 représente une vue partielle à plus grande échelle de l'agencement particulier en T de l'enceinte tubulaire de mélange, et
- la figure 3 représente une variante du diagramme schématique de l'appareillage de la figure 1.

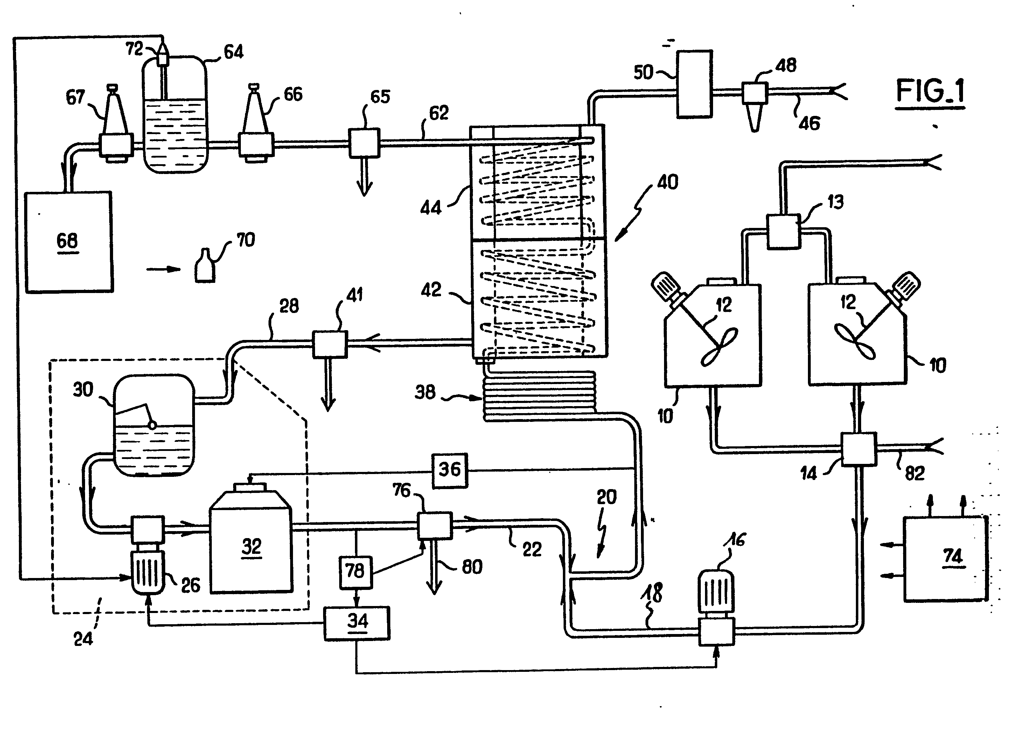

Sur les figures 1 à 3 annexées, les éléments identiques seront désignés par les mêmes références.

Dans le but de faciliter l'exposé de la description détaillée de l'appareillage représenté aux dessins annexés, on se placera dans le cas de la mise en oeuvre d'un procédé de reconstitution d'un produit alimentaire liquide préparé par dilution d'eau de reconstitution et du concentré renfermant les ingrédients de base du produit alimentaire. On devra cependant comprendre qu'une telle installation peut être parfaitement utilisée dans le cadre d'un procédé de préparation différent faisant intervenir à titre de liquide de constitution, non pas de l'eau, mais également par exemple un mélange d'eau et d'une matière grasse telle qu'une huile végétale.

L'installation représentée à la figure 1 comprend tout d'abord deux réservoirs 10 destinés à mettre sous forme de concentrés les constituants du produit alimentaire lorsque celui-ci se trouve sous forme de poudre. Chacun de ces réservoirs est chargé à l'aide de cette poudre et reçoit de l'eau en faible quantité pour délayer celle-ci, opération favorisée par le brassage qu'assure un agitateur 12. Le remplissage et la vidange des réservoirs 10 ont lieu en alternance, grâce à deux vannes à trois voies commandées à cet effet, à savoir une vanne d'entrée 13 aiguillant l'eau de délayage sur l'un ou l'autre des réservoirs 10 et une vanne de sortie 14 assurant semblablement le soutirage alternatif du concentré desdits réservoirs. Ces réservoirs 10 peuvent être de préférence thermostatés de manière que la température du concentré qu'ils délivrent reste constante.

La sortie de la vanne 14 est reliée à une pompe doseuse 16 qui introduit le concentré -à extrait sec constant- dans l'enceinte tubulaire de mélange 20 sous un débit déterminé par exemple de 100 l/h, par passage au travers du conduit 18. Cette enceinte tubulaire de mélange 20 reçoit également par un conduit 22, de l'eau de reconstitution du produit issue d'un générateur d'eau surchauffée 24 lequel comprend une pompe d'injection 26 recevant de l'eau par un conduit 28 via un régulateur d'alimentation 30, et envoyant cette eau dans un module de chauffage 32 dont la sortie est reliée au conduit 22. Les pompes 16 et 26 sont couplées par un dispositif de liaison 34 (mécanique ou électronique) réglé de manière que les débits respectifs de concentré et d'eau conduisent à un produit reconstitué offrant les proportions exactes désirées.

Dans un mode de réalisation avantageux, le module de chauffage 32 comprend par exemple une chaudière qui travaille de façon continue et qui peut être modulée en puissance calorifique en fonction du traitement particulier à effectuer. Cette eau est portée par le générateur 24 à une température généralement supérieure à environ 100°C. Dans la pratique, la température de l'eau surchauffée est généralement comprise entre environ 105° et environ 200°C, de telle sorte que la température du produit reconstitué à l'intérieur de l'enceinte tubulaire 20 soit voisine de la température à laquelle doit s'effectuer le traitement thermique. Le procédé et l'appareillage objet de la présente invention s'avèrent particulièrement intéressants pour effectuer un traitement de stérilisation du produit alimentaire. Un tel traitement peut par exemple être obtenu en injectant à l'aide de la pompe 26 de l'eau surchauffée sous une pression de l'ordre d'environ $18.10^5$Pa avec un débit de 400 litres a l'heure. Il est ainsi possible d'obtenir une température de traitement in situ du produit alimentaire liquide de l'ordre de 135°C, la pression régnant dans l'enceinte tubulaire de l'appareillage étant voisine d'environ $5.10^5$Pa. Dans de telles conditions operatoires, le mélange intime est effectué en une fraction de seconde, par exemple 1/4 de seconde, et le traitementthermique de stérilisation, par exemple dans le cas du lait, est achevé après une durée de l'ordre de 2 à 5 secondes. Il est clair qu'en injectant de l'eau surchauffée à une température plus faible voisine de 100°C, la température de liquide traité devient inférieure à 100°C. Dans ce cas, il est toutefois possible d'utiliser un tel appareillage pour effectuer un traitement de pasteurisation du produit.

Il est clair que l'eau surchauffée doit être injectée à une température supérieure à la température de traitement thermique, l'écart étant fonction de la nature, de la température et de la proportion du concentré dans le produit alimentaire liquide fini.

Le réglage correspondant de cette température peut être réalisé automatiquement à l'aide d'une sonde thermostatique 36 couplée à l'enceinte tubulaire de mélange 20 et commandant un régulateur de température dont est pourvu le module de chauffage 32 du générateur 24.

L'enceinte tubulaire de mélange 20 se prolonge par un serpentin de chambrage 38 qui, tout comme l'enceinte tubulaire de mélange 20, peut être avantageusement disposé dans une enveloppe de calorifigeage non représentée.

Le traitement thermique proprement dit, par exemple la stérilisation du produit alimentaire liquide, est entièrement réalisé dans cette enceinte tubulaire 20 et dans le serpentin de chambrage 38. Les conduits 18 et 22 sont pourvus de clapets anti-retour empêchant, en cas de défaut sur l'une ou l'autre des pompes, le mélange de refluer soit vers les réservoirs 10, soit vers le générateur d'eau surchauffée 24.

Le produit alimentaire reconstitué issu de ce serpentin de chambrage 38, où il a subi le traitement thermique désiré pendant le temps convenable grâce à la reconstitution à l'aide d'eau surchauffée, doit ensuite être refroidi pour permettre son conditionnement. Il est en effet nécessaire d'abaisser la température du produit alimentaire liquide en dessous de sa température de vaporisation afin de permettre son conditionnement.

Conformément à la présente invention, cette étape de refroidissement du produit alimentaire liquide stérilisé peut être obtenue selon deux variantes bien distinctes, correspondant à un refroidisseinent indirect ou à un refroidissement direct.

Conformément à une première variante d'exécution, l'échangeur de chaleur 40 dont le circuit d'eau de refroidissement comprend une vanne de décharge 41 est greffé sur le conduit 28 amenant l'eau au générateur 24, de sorte que celui-ci reçoit de l'eau échauffée par les calories récupérées par l'échangeur de chaleur 40 sur le produit reconstitué.

Comme cela se trouve représenté schématiquement sur la figure 1, l'échangeur de chaleur 40 peut être subdivisé en deux parties superposées 42 et 44. Il est ainsi possible, à l'aide d'un système de conduits de raccordement et de vannes approprié, de n'utiliser qu'une seule (42) ou bien les deux parties (42 et 44) de l'échangeur 40. Il convient de noter que le serpentin tubulaire qui traverse l'échangeur de chaleur 40 présente le même diamètre intérieur que tout le reste de l'enceinte tubulaire de l'appareillage. Dans la pratique, la longueur totale du serpentin tubulaire de chambrage 38 et du serpentin des parties 42 et 44 de l'échangeur de chaleur peut atteindre une longueur totale de 100 mètres et présente un diamètre intérieur de 18 mm. La conservation, dans toute l'installation d'un diamètre de tube constant supprime tout problème de lavage de l'installation et tout problème d'homogénéité dans le traitement du produit alimentaire. Il est à noter également que la totalité du conduit tubulaire s'étendant de la zone 20 à la sortie de l'échangeur de chaleur 40 ne contient aucun élément mécanique qui serait susceptible d'occasionner une pollution quelconque par communication avec le milieu extérieur.

Le fonctionnement de la vanne 41 est commandé en fonction des besoins de refroidissement, c'est-à-dire des températures d'entrée et de sortie de l'échangeur de chaleur 40 et du débit du produit reconstitué qui le traverse, par une sonde thermostatique non représentée couplée à la sortie dudit échangeur, et en fonction de la température de l'eau du générateur d'eau surchaffée. Par ailleurs, la conduite d'alimentation en eau 46 est pourvue d'adoucisseurs 48 et d'un filtre 50.

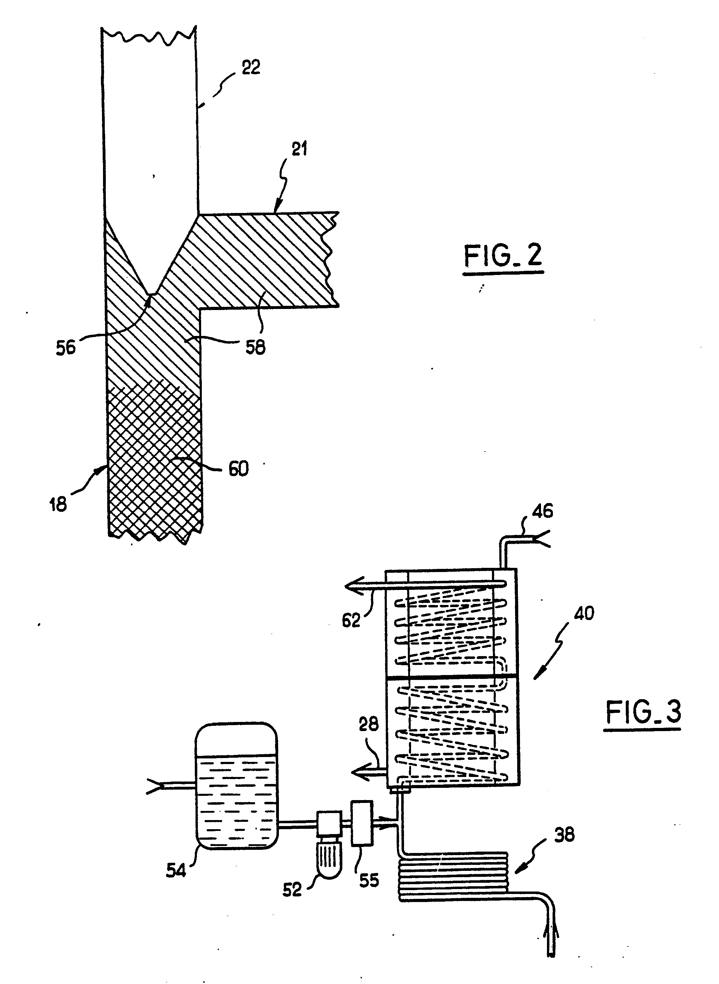

Conformément à la seconde variante de refroidissement de type direct, le schéma de l'installation est modifié tel qu'illustré à la figure 3. Dans ce mode de réalisation particulier, l'appareillage contient en outre, immédiatement en aval du serpentin de chambrage 38, un dispositif d'injection d'eau stérile froide sous pression et à température contrôlée. Ce dispositif comprend également une pompe 52 apte à délivrer sous un débit constant de l'eau stérile froide sous une pression de l'ordre de $8.10^5$Pa, en provenance d'un réservoir d'eau froide 54 et après passage d'un filtre bactériologique 55. Pour des raisons de sécurité, il est possible d'interposer, entre la pompe 52 et le filtre bactériologique 55, un clapet anti-retour assurant le maintien sous pression de l'installation même en cas de défectuosité de la pompe 52. Il est clair que la température et le débit de ce dispositif d'injection d'eau stérile froide sous pression doivent être déterminés en fonction de la nature particulière du produit à préparer. A titre d'exemple d'utilisation d'un tel appareillage, on mentionnera le cas d'un concentré constitué par une partie de lait en poudre à laquel le on ajoute une partie d'eau de délayage, de façon à réaliser dans le réservoir 10 un liquide pâteux ou une bouillie susceptible d'être pompé. Un tel prémélange est rendu homogène à l'aide du dispositif agitateur 12, il peut être préparé à l'avance et temporairement stocké. Dans le cas où le lait nécessite en vue de sa reconstitution finale l'addition de 7,5 parties additionnel les d'eau de reconstitution, il est par exemple possible de fractionner cette eau de reconstitution en deux parties. 4,5 parties d'eau peuvent par exemple être utilisées sous la forme d'eau surchauffée assurant la stérilisation du lait, alors que les trois parties additionnel les ne seront injectées qu'après le traitement de stérilisation par l'intermédiaire de la pompe 52 en aval du serpentin de chambrage 389, en vue d'assurer un refroidissement instantané du lait. Dans le cas particulier où l'on désire ajouter au lait des adjuvants sensibles à des températures élevées, par exemple des vitamines, il devient ainsi possible de les introduire dans le produit à ce stade ultérieur sans ne plus courir aucun risque de dégradation thermique.

Il est clair, tel que cela se trouve d'ailleurs représenté à la figure 3, que les deux variantes de dispositif de refroidissement peuvent être utilisées siniultanément au sein d'un même appareillage.

Pour optimiser le fonctionnement de l'appareillage selon l'invention, il est avantageux de faire appel à une enceinte tubulaire de mélange 20 ayant sensiblement la configuration représentée à la figure 2. Dans cette configuration, l'enceinte tubulaire de mélange 20 affecte la forme générale d'un T comprenant une branche tubulaire verticale 18 assurant l'arrivée ascensionnel le du concentré. La branche tubulaire verticale opposée 22 assure, elle, l'alimentation à contre-courant du liquide de constitution surchauffé par exemple d'eau surchauffée injectée sous une pression d'environ $18.10^5$Pa. La troisième branche du T, à savoir la branche horizontale 21 permet la circulation du mélange en di ection de la spirale de chambrage 38. Comme cela se trouve représenté à la figure 2, le conduit d'injection d'eau surchauffée 22 se termine par un gicleur 56 qui débouche au voisinage du prolongement de la génératrice inférieure de la branche tubulaire horizontale 21. Une telle disposition permet d'éviter tout phénomène de surchauffe du concentré qui pourrait se traduire par des dépôts ou des incrustations sur les parois dans cette zone.

Cette caractéristique particulière de l'enceinte tubulaire de mélange procure également un autre avantage fondamental, à savoir il assure la présence d'une zone entièrement stérile 58 au-delà de la zone où débouche le conduit horizontal 21. Ainsi, en cas de panne ou d'arrêt volontaire de l'appareil, il est possible de redémarrer l'installation en conservant toutes les garanties de stérilité. La zone doublement hachurée 60 correspond à une zone tampon qui ne sera que partiellement stérile du fait de la présence d'un concentré n'ayant pas encore subi l'opération de traitement thermique. Compte tenu de la disposition verticale et de l'alimentation ascensionnelle de ce concentré, sous l'effet de la gravité, ce concentré occupera en permanence cette position sans risque de venir se mélanger à la zone stérile préservée 58 représentée par des hachures simples.

Cette disposition particulière de l'enceinte tubulaire de mélange 20 permet également d'effectuer dans l'appareillage objet de la présente invention, un changement de produit alimentaire. Ce changement peut être réalisé de façon continue en modifiant simplement la nature du concentré. Dans pareil cas, il conviendra simplement d'évacuer une certaine quantité d'un mélange mixte de l'ancien et du nouveau produit, mais il est totalement inutile de prendre des précautions particulières pour maintenir la stérilité de l'ensemble de l'appareillage. Le changement de produit peut également être effectué en discontinue avec un rinçage préalable à l'aide d'un tampon d'eau surchauffée sous pression qui pourra être récupéré après en avoir simplement éliminé les fractions de tête et de queue. Cette caractéristique du procédé et de l'appareillage selon l'invention procure donc un avantage décisif par rapport à la technique antérieure faisant appel à un traitement thermique externe, c'est-à-dire par exemple à l'aide d'échangeurs à plaques.

L'echangeur de chaleur 40 est ensuite relié par un conduit 62 à un réservoir tampon 64 où se forme une réserve de produit reconstitué, traité thermiquement et refroidi. Sur le conduit 62 se trouve interposé un détendeur-régulateur 66 à clapet taré de contre-pression, qui évite la vaporisation de l'eau surchauffée à la sortie du générateur 24 et dans l'ensemble de l'enceinte tubulaire de mélange et du serpentin de chambrage 38, avant refroidissement du produit reconstitué. En cas de changement de produit, l'évacuation du mélange mixte de l'ancien et du nouveau produit tout comme l'évacuation des fractions de tête et de queue du tampon d'eau surchauffée de rinçage peuvent être avantageusement effectuées par l'intermédiaire d'une soupape de décharge 65, montée sur le conduit 62 immédiatement en aval du détendeur-régulateur 66. Cette soupape de décharge 65 sera bien sûr tarée à une pression supérieure à celle du détendeur-régulateur 66, par exemple à une pression d'environ $8.10^5$Pa lorsque le réglage de la pression dans l'ensemble du conduit tubulaire sera d'environ $5.10^5$Pa.

Le réservoir tampon 64 alimente un groupe de conditionnement stérile 68 qui assure l'emballage direct sans aucun recyclage du produit reconstitué dans des récipients 70 en préservant le caractère stérile dudit produit. Le réservoir tampon 64 est doté d'une sonde de niveau 72 qui agit sur le réglage de la pompe d'injection 26 du générateur surchauffé 24 en fonction du débit du groupe de conditionnement 68, et ce progressivement avec possibilité d'arrêt de ladite pompe, ainsi bien sûr que de la pompe 16.

On peut ainsi distinguer dans l'appareillage décrit trois parties essentielles dont chacune remplit une fonction spécifique:

- une première partie comprenant les réservoirs 10, les vannes 13 et 14 ainsi que la pompe 16, qui contient le produit à reconstituer sous forme de concentré non stérile, de concentration et de température constantes;

- une deuxième partie comprenant le générateur d'eau surchauffée 24 qui va fournir au moins une partie du liquide de constitution assurant à la fois la fonction de dilution et de traitement thermique du concentré non stérile, et enfin

- une troisième partie au sein de laquelle s'effectuent les opérations de dilution et de traitement thermique et qui comprend l'enceinte tubulaire de mélange 20, le serpentin de chambrage 38 et le ou les dispositif (s) de refroidissement 40, 52, 54, lequel débouche sur le réservoir tampon 64.

A ces trois parties précédemment décrites, s'ajoute une quatrième partie complémentaire constituée par le groupe de conditionnement stérile 68. On observe ainsi que le produit traité, tant avant qu'après reconstitution, circule dans cet ensemble constamment tenu à l'abri de l'air et sous forme liquide, sans jamais être sous forme de vapeur d'eau.

Pour assurer la stérilisation complète de l'installation, préalablement à toute opération de préparation et de traitement thermique de produits alimentaires, on réalise une circulation d'eau surchauffée dans la totalité de l'installation y compris jusqu'au stade du réservoir tampon 64 du groupe de conditionnement stérile 68. Pour stériliser le réservoir tampon 64, il faut mettre sous pression l'ensemble de l'installation, en mettant hors circuit le détendeur-régulateur 66, la pression étant assurée par un autre moyen de contre-pression, par exemple un détendeur-régulateur 67 interposé sur le conduit reliant le réservoir tampon 64 au groupe de conditionnement 68.

Le fonctionnement de l'ensemble de l'appareillage, y compris ledit groupe de conditionnement, peut être avantageusement piloté par un calculateur 74 à microprocesseur. Il suffit d'ajuster son programme en fonction de chaque produit alimentaire particulier à traiter pour que le déroulement des opérations et les points de réglage corrects de l'appareillage se trouvent déterminés automatiquement sans aucune intervention manuelle et ainsi à l'abri de tout risque d'erreur humaine.

Dans une phase de mise en marche de l'appareillage ou de redémarrage après un arrêt, il convient que l'injection d'eau dans l'enceinte tubulaire de mélange 20 ne commence pas avant que cette eau ait effectivement atteint la température requise dans le module de chauffage 32 du générateur 24. A cet effet, une vanne 76 est interposée sur le conduit 22. Cette vanne, commandée par une sonde thermostatique 78 couplée à ladite conduite dirige l'eau issue du module de chauffage d'abord vers un conduit de délestage 80, puis, à l'atteinte de la température requise, vers l'enceinte tubulaire de mélange 20. Durant la phase de délestage, la sonde 78 commande également le dispositif de couplage 34 des pompes 16 et 26, de manière que la pompe 16 délivrant le concentré soit arrêtée. Celle-ci n'est mise en service qu'au moment où commence l'injection de l'eau surchauffée dans l'enceinte tubulaire de mélange 20.

On voit par ailleurs sur la figure 1 que la vanne 14 placée en amont de la pompe 16 possède une troisième entrée intermédiaire reliée à un conduit d'alimentation en eau 82. Cette disposition particulière permet d'effectuer un rinçage et nettoyage de l'appareil, par exemple entre l'admission d'un concentré issu de l'un des réservoirs 10 et l'admission d'un concentré de nature différente issu de l'autre réservoir.

Enfin, il est possible de prévoir un moyen assurant le maintien du concentré préparé admis dans la pompe doseuse 16 à une concentration constante, tel qu'un dispositif de pesage du concentré agissant sur le débit d'eau de délayage, de manière à maintenir constante cette concentration. Le réglage à la valeur désirée peut alors être obtenu par simple affichage à l'aide d'un bouton de commande, avec éventuellement intervention du calculateur 74.

**Revendications**

1. Procédé pour la préparation en continu de produits alimentaires renfermant une fraction prépondérante de liquide de constitution, du type comprenant une opération de mélange d'un volume approprié de liquide de constitution et d'un concentré renfermant les ingrédients de base du produit alimentaire, ainsi qu'une opération de traitement thermique destinée à assurer la conservation du produit, caractérisé en ce que les opérations de mélange et de traitement thermique sont conduites simultanément par injection sous pression du concentré et d'au moins une partie du liquide de constitution surchauffé à une température supérieure à environ 100°C, dans une enceinte tubulaire fermée afin d'éviter toute vaporisation du liquide de constitution.

2. Procédé selon la revendication 1, caractérisé en ce que après une durée de traitement thermique suffisante pour assurer la conservation du produit alimentaire, on effectue un refroidissement direct dudit produit par injection sous pression d'un volume additionnel de liquide de constitution stérile dont la température est approximativement comprise entre 5 et 50°C, et qui peut éventuellement contenir des additifs thermosensibles.

3. Procédé selon l'une des revendications 1 et 2, caractérisé en ce que la température du liquide de constitution surchauffé est comprise entre 105 et 200°C.

4. Procédé selon l'une des revendications 1 à 3, caractérisé en ce que le liquide de constitution est de l'eau surchauffée injectée sous une pression de l'ordre de $18.10^5$Pa.

5. Procédé selon l'une des revendications 1 à 4, caractérisé en ce que le concentré est injecté sous une pression de l'ordre de $8.10^5$Pa.

6. Procédé selon l'une des revendications 1 à 5, caractérisé en ce que l'injection du liquide de constitution et l'injection du concentré sont réalisés à contre-courant.

7. Procédé selon l'une des revendications 1 à 6, caractérisé en ce que le concentré est injecté selon une direction ascensionnelle.

8. Procédé selon l'une des revendications 1 à 7, caractérisé en ce que le concentré est un liquide pâteux obtenu par mélange d'une faible fraction du volume du liquide de constitution et des ingrédients de base pulvérulents du produit alimentaire.

9. Procédé selon la revendication 8, caractérisé en ce que le concentré contient, en outre, des fragments pulpeux, notamment des fragments de fruits.

10. Procédé selon l'une des revendications 1 à 9, caractérisé en ce que le produit alimentaire ainsi préparé est, après refroidissement, directement soumis à un conditionnement stérile.

11. Appareillage pour la mise en oeuvre du procédé selon l'une des revendications 1 à 10, caractérisé en ce qu'il comprend une enceinte tubulaire de mélange (20) reliée d'une part à une pompe doseuse (16) délivrant le concentré soutiré d'au moins un réservoir de stockage (10), et d'autre part un générateur (24) de liquide de constitution surchauffé.

12. Appareillage selon la revendication 11, caractérisé en ce que l'enceinte tubulaire de mélange (20) affecte la forme générale d'un T comprenant:
- une branche tubulaire verticale (18) assurant l'arrivée ascensionnelle du concentré,
- une branche tubulaire verticale opposée (22) assurant l'alimentation à contre-courant du liquide de constitution surchauffé, et
- une branche tubulaire horizontale (21) permettant la circulation du mélange.

13. Appareillage selon l'une des revendications 11 et 12, caractérisé en ce que l'entrée et la sortie de l'enceinte tubulaire sont équipées respectivement de moyens anti-retour et de moyens de contre-pression.

14. Appareillage selon l'une des revendications 11 à 13, caractérisé en ce que le générateur (24) de liquide de constitution surchauffé comprend une pompe d'injection (26) alimentant l'enceinte tubulaire de mélange (20) en liquide surchauffé et en ce que la pompe doseuse (16) et la pompe d'injection (26) sont couplées mutuellement de manière que leur débit reste constamment proportionnel.

15. Appareillage selon l'une des revendications 11 à 14, caractérisé en ce que l'enceinte tubulaire de mélange (20) est équipée d'une sonde thermostatique (36) assurant le réglage, en fonction de la température dans ladite enceinte tubulaire de mélange, du module de chauffage (32) que comporte le générateur (24) de liquide de constitution surchauffé.

16. Appareillage selon l'une des revendications 11 à 15, caractérisé en ce qu'il comprend, en aval de l'enceinte tubulaire de mélange (20), un dispositif d'injection d'eau stérile froide sous pression et à température contrôlée (52, 54, 55).

17. Appareillage selon l'une des revendications 11 à 16, caractérisé en ce que l'enceinte tubulaire de mélange (20) est suivie d'un échangeur de chaleur (40) dans lequel le produit alimentaire est refroidi.

18. Appareillage selon la revendication 17, caractérisé par le fait que le circuit de refroidissement de l'échangeur de chaleur (40) est couplé au circuit d'alimentation en eau du générateur (24) de liquide de constitution surchauffé et que la chaleur extraite par l'échangeur (40) du produit alimentaire est récupérée pour échauffer l'eau d'alimentation dudit générateur.

19. Appareillage selon l'une des revendications 17 et 18, caractérisé en ce qu'en aval de l'échangeur de chaleur (40) est placé un détendeur-régulateur à clapet taré de contre-pression (66).

20. Appareillage selon l'une des revendications 11 à 19, caractérisé en ce qu'il comporte à sa sortie un réservoir tampon (64) qui reçoit le produit alimentaire de préférence refroidi, ledit réservoir (64) étant doté d'une sonde de niveau (72) agissant sur la pompe (26) du générateur (24) de liquide de constitution surchauffé.

21. Appareillage selon l'une des revendications 11 à 20, caractérisé en ce que sa sortie est directement reliée à un groupe de conditionnement stérile (68) qui effectue l'emballage du produit alimentaire ainsi traité, sans aucun recyclage.

22. Appareillage selon l'une des revendications 11 à 21, caractérisé par le fait qu'entre l'enceinte tubulaire de mélange (20) et le générateur (24) de liquide de constitution surchauffé est interposée une vanne (76) qui n'autorise l'injection de liquide dans l'enceinte tubulaire (20) que lorsque ledit liquide a atteint la température requise, sous l'action d'une sonde thermostatique (78) qui commande également l'arrêt de la pompe doseuse (16) en l'absence d'injection de liquide.

23. Appareillage selon l'une des revendications 11 à 22, caractérisé par le fait que la commande et le réglage de sec différents éléments

constitutifs sont assurés par un calculateur programmé (74) dont le programme est déterminé en fonction de chaque produit alimentaire à préparer.

**Patentansprüche**

1. Verfahren für die kontinuierliche Herstellung von zum grössten Teil aus einer Basisflüssigkeit bestehenden Nahrungsmitteln, in dem ein geeignetes Volumen einer Basisflüssigkeit mit einem Konzentrat vermischt wird, das die Grundzutaten des Nahrungsmittels enthält, und in dem das Produkt im Hinblick auf seine Konservierung einer Wärmebehandlung unterzogen wird,

dadurch gekennzeichnet, dass die Arbeitsgänge der Vermischung und der Wärmebehandlung gleichzeitig durch Einspritzung unter Druck des Konzentrats und mindestens eines Teils der auf eine temperatur über 100°C aufgeheizten Basisflüssigkeit in einen geschlossenen rohrförmigen Behälter durchgeführt werden, um eine Verdampfung der Basisflüssigkeit zu vermeiden.

2. Verfahren nach Anspruch 1, dadurch gekennzeichnet, dass nach einer ausreichenden Dauer der Wärmebehandlung, um eine Konservierung des Nahrungsmittels zu gewährleisten, eine direkte Abkühlung des Produktes durch Druckeinspritzung eines zusätzlichen Volumens steriler Basisflüssigkeit durchgeführt wird, wobei dieses Zusatzvolumen eine Temperatur von etwa 5 bis 50° C hat und eventuell wärmeempfindliche Zussätze enthalten kann.

3. Verfahren nach einem der Ansprüche 1 oder 2, dadurch gekennzeichnet, dass die Temperatur der aufgeheizten Basisflüssigkeit zwischen 105 und 200°C liegt.

4. Verfahren nach einem der Ansprüche 1 bis 3, dadurch gekennzeichnet, dass die Basisflüssigkeit aufgeheiztes Wasser ist, das mit einem Druck in der Grössenordnung von $18.10^5$Pa eingespritzt wird.

5. Verfahren nach einem der Ansprüche 1 bis 4, dadurch gekennzeichnet, dass das Konzentrat mit einem Druck in der Grössenordnung von $8.10^5$Pa eingespritzt wird.

6. Verfahren nach einem der Ansprüche 1 bis 5, dadurch gekennzeichnet, dass die Einspritzung der Basisflüssigkeit und die Einspritzung des Konzentrats im Gegenstrom erfolgen.

7. Verfahren nach einem der Ansprüche 1 bis 6, dadurch gekennzeichnet, dass das Konzentrat in aufsteigender Richtung eingespritzt wird.

8. Verfahren nach einem der Ansprüche 1 bis 7, dadurch gekennzeichnet, dass das Konzentrat eine breiartige Flüssigkeit ist, die aus einer Vermischung eines geringen Volumenteils der Basisflüssigkeit mit pulverförmigen Basiszutaten des Nahrungsmittelproduktes besteht.

9. Verfahren nach Anspruch 8, dadurch gekennzeichnet, dass das Konzentrat ausserdem Pulpfragmente insbesondere von Früchten enthält.

10. Verfahren nach einem der Ansprüche 1 bis 9, dadurch gekennzeichnet, dass das so hergestellte Nahrungsmittelprodukt nach der Abkühlung sofort einer Sterilisierungsbehandlung unterzogen wird.

11. Vorrichtung zur Durchführung des Verfahrens nach einem der Ansprüche 1 bis 10, dadurch gekennzeichnet, dass eine rohrförmige Mischkammer (20) vorgesehen ist, die einerseits mit einer Dosierpumpe (16) verbunden ist, welche das aus mindestens einem Vorratsbehälter (10) abgezogene Konzentrat abgibt und welche andererseits mit einem Erzeuger (24) für aufgeheizte Basisflüssigkeit verbunden ist.

12. Vorrichtung nach Anspruch 11, dadurch gekennzeichnet, dass die rohrförmige Mischkammer (20) einen weitgehend T-förmigen Aufbau hat, der folgendes umfasst
- einen vertikalen Rohrabschnitt (18) für die aufsteigende Zuführung des Konzentrats,
- einen gegenüberliegenden vertikalen Rohrabschnitt (22) für die gegenläufige Zuführung der aufgeheizten Basisflüssigkeit, und
- einen horizontalen Rohrabschnitt (21) für die Zirkulierung des Gemischs.

13. Vorrichtung nach einem der Ansprüche 11 und 12, dadurch gekennzeichnet, dass der Einlass und Auslass der rohrförmigen Kammer jeweils mit Rückschlag- und Gegendruckmindervorrichtungen ausgerüstet sind.

14. Vorrichtung nach einem der Ansprüche 11 bis 13, dadurch gekennzeichnet, dass der Erzeuger (24) für aufgewärmte Basisflüssigkeit eine Einspritzpumpe (26) aufweist, welche die rohrförmige Mischkammer (20) mit aufgewärmter Flüssigkeit versorgt, und dass die Dosierpumpe (16) und die Einspritzpumpe (26) mitcinander gekoppelt sind, so dass ihr Durchsatz stets-proportional bleibt.

15. Vorrichtung nach einem der Ansprüche 11 bis 14, dadurch gekennzeichnet, dass die rohrförmige Mischkammer (20) mit einem thermostat (36) ausgestattet ist, welcher in Abhängigkeit von der temperatur in der rohrförmigen Mischkammer das Heizmodul (32) regelt, welches in dem Erzeuger (24) für aufgeheizte Basisflüssigkeit vorgesehen ist.

16. Vorrichtung nach einem der Ansprüche 11 bis 15, dadurch gekennzeichnet, dass sie unterhalb der rohrförmigen Mischkammer (20) eine Einspritzvorrichtung für unter Druck stehendes kaltes steriles Wasser aufweist, dessen temperatur kontrolliert wird (52, 54, 55).

17. Vorrichtung nach einem der Ansprüche 11 bis 16,
dadurch gekennzeichnet, dass
hinter der rohrförmigen Mischkammer (20) ein Wärmetauscher (40) vorgesehen ist, in dem das Nahrungsmittelprodukt abgekühlt wird.

18. Vorrichtung nach Anspruch 17,
dadurch gekennzeichnet, dass der Kühlkreis des Wärmetauschers (40) an den Wasserversorgungskreis des Erzeugers (24) der aufgeheizten Basisflüssigkeit gekoppelt ist und dass die durch den Wärmetauscher (40) aus dem Nahrungsmittelprodukt abgezogene Wärme aufgefangen wird, um das Versorgungswasser des Erzeugers aufzuheizen.

19. Vorrichtung nach einem der Ansprüche 17 und 18,
dadurch gekennzeichnet, dass
unterhalb des Wärmetauschers (40) ein Gegendruckminderregler (66) mit geeichtem Ventil angeordnet ist.

20. Vorrichtung nach einem der Ansprüche 11 bis 19,
dadurch gekennzeichnet, dass
sie an ihrem Ausgang einen Pufferbehälter (64) für die Aufnahme des vorzugsweise abgekühlten Nahrungsmittelproduktes aufweist, wobei dieser Behälter (64) mit einer Flüssigkeitsstandssonde (72) ausgestattet ist, die auf die Pumpe (26) des Erzeugers (24) von aufgeheizter Basisflüssigkeit einwirkt.

21. Vorrichtung nach einem der Ansprüche 11 bis 20,
dadurch gekennzeichnet, dass
ihr Auslass direkt an eine sterile Konservierungseinrichtung (68) angeschlossen ist, welche die Verpackung des so behandelten Nahrungsmittelproduktes ohne weitere Aufbereitung durchführt.

22. Vorrichtung nach einem der Ansprüche 11 bis 21,
dadurch gekennzeichnet, dass
zwischen der rohrförmigen Mischkammer (20) und dem Erzeuger (24) aufgeheizter Basisflüssigkeit ein Ventil (76) angeordnet ist, das nur dann die Einspritzung von Flüssigkeit in die rohrförmige Kammer (20) zulässt, wenn diese Flüssigkeit die erforderliche Temperatur unter der Einwirkung eines thermostats (78) erreicht hat, welcher ebenfalls den Stillstand der Dosierpumpe (16) steuert, wenn keine Flüssigkeit eingespritzt wird.

23. Vorrichtung nach einem der Ansprüche 11 bis 22.
dadurch gekennzeichnet, dass
die Steuerung und Regelung dieser verschiedenen Bauteile durch einen programmierten Rechner (74) gewährleistet wird, dessen Programm je nach dem herzustellenden Nahrungsmittelprodukt bestimmt wird.

**Claims**

1. A process for the continuous preparation of food products containing a preponderant fraction of constituting liquid, said process being of the type comprising an operation involving the mixing of an appropriate volume of constituting liquid with a concentrate containing the basic ingredients of the food product, and also a heat treatment operation intended for preserving the product, characterized in that the operations of mixing and heat treatment are carried out simultaneously by the injection, under pressure, of the concentrate and at least part of the constituting liquid, superheated to a temperature above about 100°C, into a closed tubular chamber so as to prevent any vaporization of the constituting liquid.

2. A process according to claim 1, characterized in that, after a sufficient heat treatment time to ensure preservation of the food product, the said product is cooled directly by the injection under pressure of an additional volume of sterile constituting liquid at a temperature which is approximately between 5 and 50°C and which may contain heat-sensitive additives.

3. A process according to one of claims 1 and 2, characterized in that the temperature of the superheated constituting liquid is between 105 and 200°C.

4. A process according to one of claims 1 to 3, characterized in that the constituting liquid is superheated water injected under a pressure of the order of $18.10^5$Pa.

5. A process according to one of claims 1 to 4, characterized in that the concentrate is injected under a pressure of the order of $8.10^5$Pa.

6. A process according to one of claims 1 to 5, characterized in that the injection of the constituting liquid and the injection of the concentrate are carried out counter-current.

7. A process according to one of claims 1 to 6, characterized in that the concentrate is injected in an ascending direction.

8. A process according to one of claims 1 to 7, characterized in that the concentrate is a pasty liquid obtained by mixing a small fraction of the volume of the constituting liquid and the pulverulent basic ingredients of the food product.

9. A process according to claim 8, characterized in that the concentrate also contains pulpy fragments, especially fragments of fruit.

10. A process according to one of claims 1 to 9, characterized in that the food product prepared in this way is directly packaged under sterile conditions, after cooling.

11. An apparatus for performing the process according to one of claims 1 to 10, characterised in that it comprises a tubular mixing chamber (20) connected on the one hand to a metering pump (16) delivering the concentrate withdrawn from at least one storage tank (10), and on the other hand to a generator (24) of superheated constituting liquid.

12. Apparatus according to claim 11, characterized in that the tubular mixing chamber (20) adopts the general shape of a T comprising:
- a vertical tubular branch (18) for the arrival of the concentrate in the ascending direction,
- an opposite vertical tubular branch (22) for the feeding, in countercurrent, of the superheated constituting liquid, and
- a horizontal tubular branch (21) allowing the mixture to circulate.

13. apparatus according to one of claims 11 and 12, characterized in that the inlet and outlet of the tubular chamber are equipped respectively with non-return means and back-pressure means.

14. Apparatus according to one of claims 11 to 13, characterized in that the generator (24) of superheated constituting liquid comprises an injection pump (26) feeding the tubular mixing chamber (20) with superheated liquid, and in that the metering pump (16) and the injection pump (26) are mutually coupled so that their outputs constantly remain proportional.

15. Apparatus according to one of claims 11 to 14, characterized in that the tubular mixing chamber (20) is equipped with a thermostatic sensor (36) effecting the regulation, as a function of the temperature in the said tubular mixing chamber, of the heating module (32) which includes the generator (24) of superheated constituting liquid.

16. Apparatus according to one of claims 11 to 15, characterized in that it comprises, downstream of the tubular mixing chamber (20), a device for injecting cold sterile water under pressure and at a controlled temperature (52, 54, 55).

17. Apparatus according to one of claims 11 to 16, characterized in that the tubular mixing chamber (20) is followed by a heat exchanger (40) in which the food product is cooled.

18. Apparatus according to claim 17, characterized in that the cooling circuit of the heat exchanger (40) is coupled to the water feed circuit of the generator (24) of superheated constituting liquid, and in that the heat extracted from the food product by the exchanger (40) is recovered for the purpose of heating

19. Apparatus according to one of claims 17 and 18, characterized in that a pressure reducing valve/regulator with a calibrated back-pressure valve (66) is located downstream of the heat exchanger (40).

20. Apparatus according to one of claims 11 to 19, characterized in that it comprises, at its outlet, a buffer tank (64) which receives the food product, preferably cooled, the said tank (64) possessing a level sensor (72) which acts on the pump (26) of the generator (24) of superheated constituting liquid.

21. Apparatus according to one of claims 11 to 20, characterized in that its outlet is connected directly to a sterile packaging unit (68) which packs the food product treated in this way, without any recycling.

22. Apparatus according to one of claims 11 to 21, characterized in that a valve (76) is inserted between the tubular mixing chamber (20) and the generator (24) of superheated consistuting liquid, the said valve not allowing the injection of liquid into the tubular chamber (20) until the said liquid has reached the required temperature, under the action of a thermostatic sensor (78) which also controls the stopping of the metering pump (16) if there is no injection of liquid.

23. Apparatus according to one of claims 11 to 22, characterized in that its different constituent elements are controlled and regulated by a programmed computer (74) whose program is determined according to each food product to be prepared.

FIG.1

FIG_2

FIG_3